# EUROPÄISCHE PATENTSCHRIFT

(11) **EP 2 194 078 B1**
(45) Veröffentlichungstag und Bekanntmachung des Hinweises auf die Patenterteilung: **13.03.2013**
(21) Anmeldenummer: 08170972.7
(22) Anmeldetag: 08.12.2008
(51) Int. Cl.: C08F 290/06, C08F 290/14, C08F 222/00, C08F 220/00, C08F 216/00

(54) **Verfahren zur Herstellung von Copolymeren**
Process for the production of copolymers
Procédé pour la production de copolymères.

(43) Veröffentlichungstag der Anmeldung: 09.06.2010
(73) Patentinhaber: Construction Research & Technology GmbH, 83308 Trostberg (DE)
(72) Erfinder: Vierle, Mario, 83512, Wasserburg (DE); Scholz, Christian, 83308, Trostberg (DE)

(56) Entgegenhaltungen:
- EP-A- 0 736 553
- EP-A- 0 894 811
- WO-A-2005/075529
- WO-A-2007/076941
- US-A- 4 471 100
- US-A- 5 326 657
- US-A1- 2007 161 724

## Beschreibung

Die vorliegende Erfindung betrifft ein Verfahren zur Herstellung eines Copolymers.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren mit Polyethermakromonomeren hergestellt werden.

In der Praxis erfolgt die Copolymerisation meist in der Semi-Batch-Fahrweise. Die WO 2005/075529 und US 2007 0161724 beschrieben ein semikontinuierliches Herstellungsverfahren für besagte Copolymere, in welchem das Polyethermakromonomer vorgelegt wird und anschließend das Säuremonomer über die Zeit der Vorlage zudosiert wird. Obwohl das beschriebene Verfahren bereits kostengünstig ist und als Verfahrensprodukt Hochleistungsfließmittel erhalten werden, besteht weiterhin ein Bestreben, die Wirtschaftlichkeit des Verfahrens sowie Qualität des Verfahrensprodukts noch weiter zu verbessern.

WO 2007076941, EP0894811, US4471100, und EP0736553 beschrieben Copolymere auf Basis von ungesättigten Dicarbonsäure-Derivaten und Oxyalkylenglykol-Alkenylethern, und ein Verfahren mit Dosierung zur Herstellung davon.

Die der vorliegenden Erfindung zugrunde liegende Aufgabe ist es somit, ein wirtschaftliches Verfahren zur Herstellung von Copolymeren bereit zu stellen, welche als Dispergiermittel für hydraulische Bindemittel, speziell als Fließmittel, eine gute Performance zeigen.

Die Lösung dieser Aufgabe ist ein Verfahren zur Herstellung eines Copolymers in semikontinuierlicher Betriebsweise in einer Polymerisationsvorrichtung enthaltend einen mit einer Dosiereinrichtung verbundenen Polymerisationsreaktor, wobei Säuremonomer in der Dosiereinrichtung sowie Polyethermakromonomer und Wasser in dem Polymerisationsreaktor jeweils vorgelegt werden, Säuremonomer aus der Dosiereinrichtung in den Polymerisationsreaktor eindosiert wird, vor und/oder während der Eindosierung des Säuremonomers in den Polymerisationsreaktor radikalischer Polymerisationsinitiator in den Polymerisationsreaktor eingeleitet wird, so dass in dem Polymerisationsreaktor ein wässriges Medium entsteht, in welchem Säuremonomer und Polyethermakromonomer unter Bildung des Copolymers durch radikalische Polymerisation umgesetzt werden, als radikalischer Polymerisationsinitiator ein H₂O₂ oder Alkaliperoxodisulfat enthaltendes Redoxinitiatorsystem eingesetzt wird, die Temperatur des wässrigen Mediums während der Polymerisation auf 5 bis 43 °C eingestellt wird, zu Beginn der Polymerisation die Temperatur des wässrigen Mediums maximal 28 °C beträgt, pro eingesetztes Mol Polyethermakromonomer insgesamt 1 bis 20 Mol Säuremonomer in den Polymerisationsreaktor eindosiert werden, das Gewichtsverhältnis von eingesetztem Polyethermakromonomer zu eingesetztem Wasser 5 : 1 bis 1 : 5 beträgt, wobei mindestens 70 Gew.-% des in dem Polymerisationsreaktor vorgelegten Wassers in der Weise bereitgestellt wird, dass es entweder mit einer Temperatur von maximal 19 °C in den Polymerisationsreaktor gegeben wird oder dass es, bevor es in den Polymerisationsreaktor gegeben wird, mit dem Polyethermakromonomer vereinigt wird und dabei eine Temperatur von maximal 19 °C aufweist.

Als Säuremonomer sollen radikalisch copolymerisierbare, mindestens eine Kohlenstoffdoppelbindung aufweisenden Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisenden Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid oder basisch hydrolysierbare Ester wie Ethylacrylat). Polyethermakromonomere im Sinne der vorliegenden Erfindung sind radikalisch copolymerisierbare Verbindungen mit mindestens einer Kohlenstoffdoppelbindung, welche mindestens zwei Ether-Sauerstoffatome aufweisen und zwar mit der Maßgabe, dass die in dem Copolymer enthaltenen Polyethermakromonomerstruktureinheiten Seitenketten aufweisen, die mindestens zwei Ether-Sauerstoffatome enthalten.

Die Konsistenz der beschriebenen Polyethermakromonomere bei Raumtemperatur ist hauptsächlich von der molaren Masse abhängig. In nahezu allen Fällen liegen diese Polyethermakromonomere bei Raumtemperatur als Feststoff vor. Da eine Feststoffdosierung bei großtechnischen Prozessen generell aufwändiger als eine Flüssigkeitsdosierung ist und die Auflösungsgeschwindigkeit der in fester Form vorliegenden Polyethermakromonomere mit steigender Molmasse deutlich abnimmt, wird in den meisten Fällen das Makromonomer als Schmelze gehandhabt. Da beim ersten Schritt der Polymersynthese eine wässrige Lösung des Polyethermakromonomeren hergestellt wird, ist die durch Vermischen des als Schmelze vorliegenden Polyethermakromonomers mit Wassers sich einstellende Temperatur der Lösung in vielen Fällen sehr hoch und muss durch Kühlung bis zur Startemperatur abgesenkt werden. Die aufzuwendende Kühlzeit verlängert jedoch die Batchzeit.

Dadurch dass in dem erfindungsgemäßen Verfahren verhältnismäßig kühles Wasser bereitgestellt wird, entfallen Kühlzeiten für Ausgangsstoffe bzw. entsprechende Kühlzeiten verkürzen sich. Mit der Verkürzung oder dem Entfallen der Kühlzeit ist - aus verfahrenstechnischer Sicht - eine Verbesserung der sogenannten Raum- Zeitausbeute verbunden, wodurch pro Zeiteinheit mehr Ansätze möglich sind. Dies bewirkt eine deutliche Verbesserung der Wirtschaftlichkeit.

In einer besonders bevorzugten Ausführungsform der Erfindung werden die mindestens 70 Gew.-% des in dem Polymerisationsreaktor vorgelegten Wassers, welches bereitgestellt wird, aus in der Natur vorkommendem Grund- oder Oberflächenwasser (z.B. Flusswasser), bevorzugt Grundwasser, entnommen.

Bei einer Kühlung der Makromonomerlösung durch externe Kühlung muss weiterhin eine erhebliche Menge Energie aufgewendet werden. Durch eine nach Mischung des in Schmelze vorliegenden Makromonomers mit verhältnismäßig kühlem Wasser und der daraus resultierenden niedrigeren Temperatur kann auf diese Weise Kühlenergie gespart werden, wodurch die Wirtschaftlichkeit noch weiter verbessert wird.

Normalerweise wird die Temperatur des wässrigen Mediums während der Polymerisation auf 10 bis 38 °C eingestellt, wobei dann zu Beginn der Polymerisation die Temperatur des wässrigen Mediums maximal 24 °C beträgt, sowie mindestens 80 Gew.-% des in dem Polymerisationsreaktor vorgelegten Wassers in der Weise gekühlt bereitgestellt wird, dass es entweder mit einer Temperatur von 2 bis 17 °C in den Polymerisationsreaktor gegeben wird oder dass es bevor es in den Polymerisationsreaktor gegeben wird mit dem Polyethermakromonomer vereinigt wird und dabei eine Temperatur von 2 bis 17 °C aufweist.

Bevorzugt wird durch die Umsetzung des Säuremonomers eine Struktureinheit im Copolymer erzeugt, die gemäß einer der allgemeinen Formeln (la), (Ib), (Ic) und/oder (Id) ist 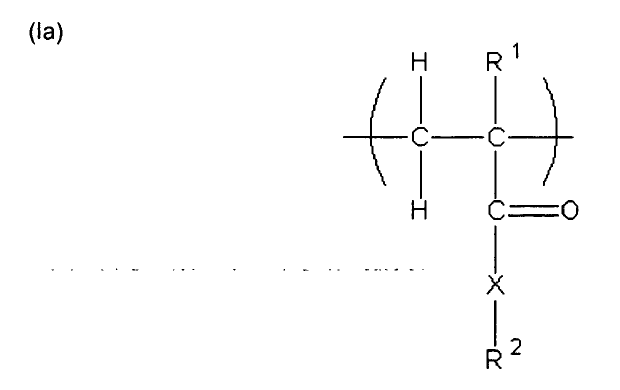 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 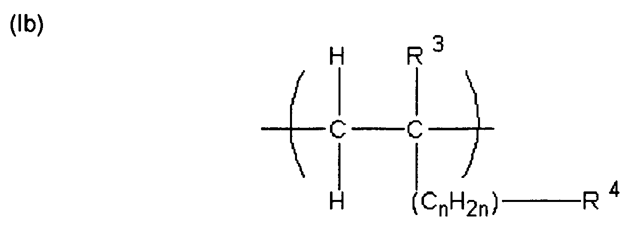 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 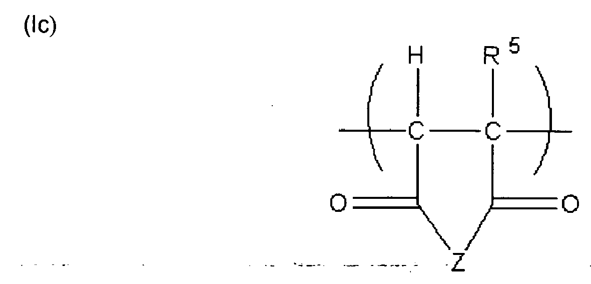 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 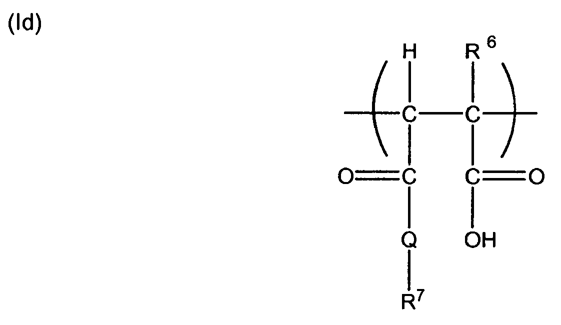 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe. Häufig wird als Säuremonomer Methacrylsäure, Acrylsäure, Maleinsäure, Maleinsäureanhydrid, ein Halbester der Maleinsäure oder eine Mischung aus mehreren dieser Komponenten eingesetzt.

Je nach pH-Wert können die Säuremonomerstruktureinheiten des Copolymers auch in deprotonierter Form als Salz vorliegen, wobei dann als Gegenionen Na⁺, K⁺ sowie Ca²⁺ typisch sind.

In der Regel wird durch die Umsetzung des Polyethermakromonomers eine Struktureinheit im Copolymer erzeugt, die gemäß einer der allgemeinen Formeln (IIa), (IIb) und/oder (IIc) ist 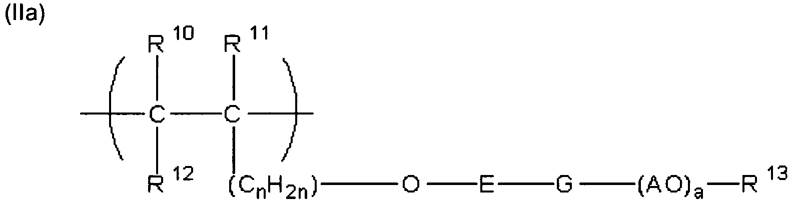 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 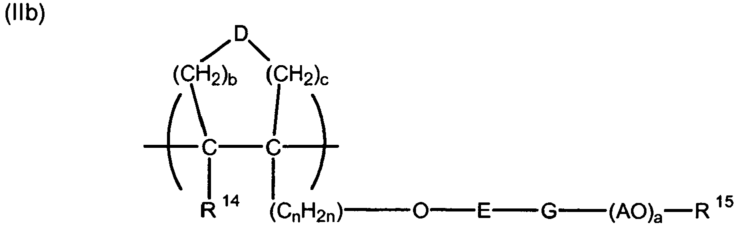 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 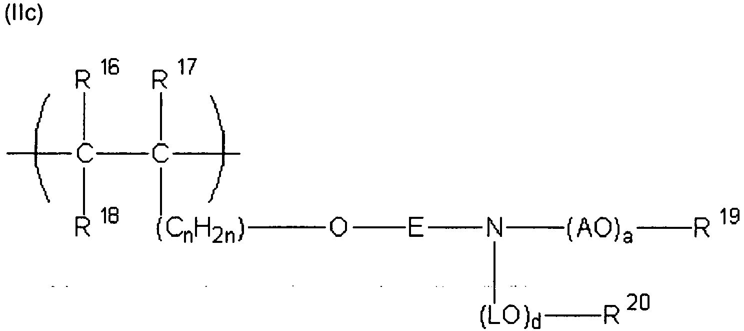 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

Häufig wird als Polyethermakromonomer alkoxylierter Hydroxybutylvinylether und/oder alkoxylierter Diethylenglykolmonovinylether und/oder alkoxyliertes Isoprenol und/oder alkoxylierter (Meth)allylalkohol und/oder vinyliertes Methylpolyalkylenglykol mit bevorzugt jeweils einer arithmetisch mittleren Zahl an Oxyalkylengruppen von 4 bis 300 eingesetzt.

Die Alkoxyeinheiten der Polyethermakromonomere liegen in der Regel als Ethoxygruppen oder als Gemisch aus Ethoxy- und Propoxygruppen vor (diese Polyethermakromonomere sind erhältlich aus der Ethoxylierung bzw. Propoxylierung der entsprechenden Monomeralkohole.

In der Regel wird als radikalische Polymerisationsinitiator ein H₂O₂ oder Alkaliperoxodisulfat enthaltendes Redoxinitiatorsystem eingesetzt, welches zusammen mit einem Reduktionsmittel verwendet wird, wobei das Reduktionsmittel bevorzugt vorliegt in Form von Natriumsulfit, Dinatriumsalz der 2-Hydroxy-2-sulfinatoessigsäure, Dinatriumsalz der 2-Hydroxy-2-sulfonatoessigsäure, Natriumhydroxymethansulfinat, Ascorbinsäure und/oder Iso-Ascorbinsäure, wobei die Temperatur des wässrigen Mediums während der Polymerisation auf 5 bis 43 °C eingestellt wird und zu Beginn der Polymerisation die Temperatur des wässrigen Mediums maximal 28 °C beträgt.

Bevorzugt liegt das wässrige Medium in Form einer wässrigen Lösung vor.

Meist werden mindestens 45 Mol-%, bevorzugt mindestens 80 Mol-% aller Struktureinheiten des Copolymers durch Einpolymerisieren von Säuremonomer und Polyethermakromonomer erzeugt.

Oft wird ein Kettenregler eingesetzt, welcher normalerweise mindestens eine Thiolgruppe enthält.

### Synthesebeispiele

### Polymer 1

In einen Doppelwandreaktor - ausgestattet mit Rührer, pH-Elektrode und mehreren Zulaufeinrichtungen - werden 336 g Wasser mit einer Temperatur von 15,0 °C und 348,00 g in Schmelze mit einer Temperatur von 80 °C vorliegender Vinyloxybutylpolyethylenglykol (Anlagerungsprodukt aus 129 Mol Ethylenoxid an 4-Hydroxybutylmonovinylether) vorgelegt. Es ergibt sich eine Mischtemperatur von 42,0 °C. Der Reaktorinhalt wird anschließend auf eine Temperatur von 25,0 °C gekühlt, die Umlauftemperatur des Kühlmediums beträgt hierbei konstant 13,0 °C.

In einem separaten Zulaufgefäß werden 17,60 g Acrylsäure und 3,41 g Maleinsäureanhydrid mit 61,07 g deionisiertem Wasser homogen vermischt und unter Kühlen 7,83 g einer 40 %igen Kaliumhydroxydlösung zugegeben.

Parallel wird eine zweite Lösung bestehend aus 1,08 g Brüggolit ® FF6 (Handelsprodukt der Firma Brüggemann Chemicals GmbH) und 17,00 g Wasser hergestellt (Lösung B).

Nach erfolgtem Abkühlen der Vorlagemischung auf 25,0 °C (15 min nach Zugabe der Vinyloxybutylpolyethylenglykolschmelze) werden 42,50 mL der Lösung A sowie 3,90 g 20 %ige Natronlauge und 0,21 g 3-Mercaptopropionsäure zur Vorlage gegeben. Anschließend werden zur verbleibenden Lösung A 1,88 g 3-Mercaptopropionsäure zugegeben, anschließend 0,12 g Eisen-II-sulfat-Heptahydrat sowie 2,00 g Wasserstoffperoxid (30 % in Wasser) zum Vorlagegemisch gegeben und die Reaktion gestartet. Zeitgleich wird mit der Zugabe von Lösung A und Lösung B zur gerührten Vorlage begonnen.

Die Dosierraten der Lösung A kann folgenden Dosierprofils entnommen werden. Lösung B wird mit konstanter Dosierrate bis zum Ende der Dosierung von Lösung A in den Reaktor dosiert.

| | | | | | | | | | | | | |
|---|---|---|---|---|---|---|---|---|---|---|---|---|
| t (min) | 0 | 2 | 4 | 8 | 10 | 12 | 14 | 16 | 18 | 22 | 26 | 30 |
| Lösung A (mUh) | 129 | 144 | 149 | 144 | 129 | 106 | 87 | 69 | 54 | 33 | 21 | 0 |

Nach Beendigung der Reaktion wird die erhaltene Polymerlösung mit 20 %iger Natriumhydroxid-Lösung auf einen pH-Wert von 6,5 eingestellt.

Man erhält eine leicht gelbliche Polymerlösung, das Copolymer weist ein Massenmittel von 53000 g/Mol auf.

### Polymer 2

Polymer 2 wird analog zu Polymer 1 synthetisiert, wobei bei der Herstellung der Mischung von Vinyloxibutylpolyethylenglykol mit Wasser die Temperatur des verwendeten Wassers 25,0 °C beträgt. Es ergibt sich eine Mischungstemperatur von 48,5 °C, die Zeit bis zum Abkühlen der wässrigen Lösung auf 25,0 °C beträgt 17 Minuten.

Nach analoger Herstellweise zu Polymer1 erhält man eine leicht gelbliche Polymerlösung, das Copolymer weist ein Massenmittel von 53500 g/mol auf.

Im Folgenden sind die Temperatur- und Zeitunterschiede noch mal tabellarisch dargestellt:

| | Wassertemperatur | Mischungstemperatur | Abkühlzeit bis 25,0 °C |
|---|---|---|---|
| Polymer 1 | 15,0 °C | 42,0 °C | 15 min |
| Polymer 2 | 25,0 °C | 48,5 °C | 17 min |

Bei der Herstellung von Polymer 2, bei dem Wasser mit einer Temperatur von 25 °C verwendet wurde, ist die Mischtemperatur deutlich höher, somit verlängert sich deutlich die Kühlzeit und der Energieaufwand zum Abkühlen der Mischung ist deutlich höher. Im Folgenden sollen die anwendungstechnischen Daten der Polymere näher beleuchtet werden:
400 kg Portlandzement (CEM I 42,5 R) wurden mit runden Zuschlägen, zusammengesetzt entsprechend der Fuller-Sieblinie mit einem Größtkorn von 16 mm und 140 kg Wasser, welches die erfindungsgemäßen Produkte in gelöster Form enthielt, angerührt. Unmittelbar nach der Herstellung der Betonmischung erfolgten die Bestimmung der Frischbetoneigenschaften sowie deren zeitliche Veränderung über einen Zeitraum von 30 Minuten.

Die Ergebnisse der Prüfung zeigt unten stehende Tabelle.

| Fließmittel | Dosierung¹ | Ausbreitmaß² in cm | | | Luftporengehalt / % | Druckfestigkeit 24h / MPa |
|---|---|---|---|---|---|---|
| | | 0 min | 10 min | 30 min | | |
| Polymer 1 | 0,14 % | 58 | 37 | 32 | 2,4 % | 54,0 |
| Polymer 2 | 0,14 % | 58 | 38 | 32 | 2,5 % | 53,5 |

| | | | | | | |
|---|---|---|---|---|---|---|
| ¹ Dosierung in Gew.-% Polymerfeststoff bezogen auf die Zementeinwaage, ² Bestimmung nach DIN EN 12350-5 | | | | | | |

Aus obigen Ergebnissen wird deutlich, dass Polymer 1 und Polymer 2 im Rahmen der Messgenauigkeit identische Anwendungseigenschaften aufweisen und der wirtschaftliche Vorteil bei der Verwendung von kühlem Brunnenwasser in der Synthese von Polymer 1 nicht durch eine Verschlechterung der Anwendungseigenschaften minimiert wird.

## Patentansprüche

1. Verfahren zur Herstellung eines Copolymers in semikontinuierlicher Betriebsweise in einer Polymerisationsvorrichtung enthaltend einen mit einer Dosiereinrichtung verbundenen Polymerisationsreaktor, wobei Säuremonomer in der Dosiereinrichtung sowie Polyethermakromonomer und Wasser in dem Polymerisationsreaktor jeweils vorgelegt werden, Säuremonomer aus der Dosiereinrichtung in den Polymerisationsreaktor eindosiert wird, vor und/oder während der Eindosierung des Säuremonomers in den Polymerisationsreaktor radikalischer Polymerisationsinitiator in den Polymerisationsreaktor eingeleitet wird, so dass in dem Polymerisationsreaktor ein wässriges Medium entsteht, in welchem Säuremonomer und Polyethermakromonomer unter Bildung des Copolymers durch radikalische Polymerisation umgesetzt werden, als radikalischer Polymerisationsinitiator ein H₂O₂ oder Alkaliperoxodisulfat enthaltendes Redoxinitiatorsystem eingesetzt wird, die Temperatur des wässrigen Mediums während der Polymerisation auf 5 bis 43 °C eingestellt wird, zu Beginn der Polymerisation die Temperatur des wässrigen Mediums maximal 28 °C beträgt, pro eingesetztes Mol Polyethermakromonomer insgesamt 1 bis 20 Mol Säuremonomer in den Polymerisationsreaktor eindosiert werden, das Gewichtsverhältnis von eingesetztem Polyethermakromonomer zu eingesetztem Wasser 5 : 1 bis 1 : 5 beträgt, wobei mindestens 70 Gew.-% des in dem Polymerisationsreaktor vorgelegten Wassers in der Weise bereitgestellt wird, dass es entweder mit einer Temperatur von maximal 19 °C in den Polymerisationsreaktor gegeben wird oder dass es bevor es in den Polymerisationsreaktor gegeben wird mit dem Polyethermakromonomer vereinigt wird und dabei eine Temperatur von maximal 19 °C aufweist.

2. Verfahren nach Anspruch 1, **dadurch gekennzeichnet, dass** die mindestens 70 Gew.-% des in dem Polymerisationsreaktor vorgelegten Wassers, welches bereitgestellt wird, aus in der Natur vorkommendem Grund- oder Oberflächenwasser, bevorzugt Grundwasser, entnommen wird.

3. Verfahren nach Anspruch 1 oder 2, **dadurch gekennzeichnet, dass** die Temperatur des wässrigen Mediums während der Polymerisation auf 10 bis 38 °C eingestellt wird und zu Beginn der Polymerisation die Temperatur des wässrigen Mediums maximal 24 °C beträgt, sowie mindestens 80 Gew.-% des in dem Polymerisationsreaktor vorgelegten Wassers in der Weise gekühlt bereitgestellt wird, dass es entweder mit einer Temperatur von 2 bis 17 °C in den Polymerisationsreaktor gegeben wird oder dass es bevor es in den Polymerisationsreaktor gegeben wird mit dem Polyethermakromonomer vereinigt wird und dabei eine Temperatur von 2 bis 17 °C aufweist.

4. Verfahren nach einem der Anspruch 1 bis 3, **dadurch gekennzeichnet, dass** durch die Umsetzung des Säuremonomers eine Struktureinheit im Copolymer erzeugt wird, die gemäß einer der allgemeinen Formeln (Ia), (Ib), (Ic) und/oder (Id) ist 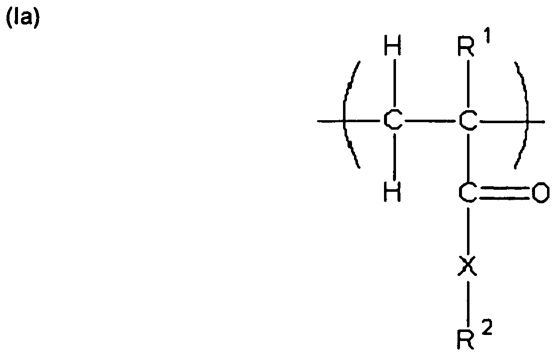 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 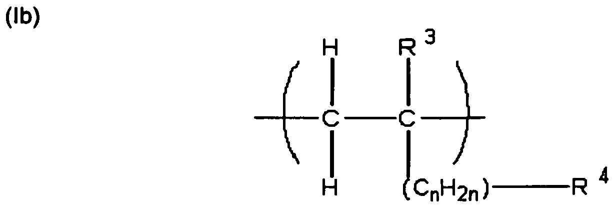 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 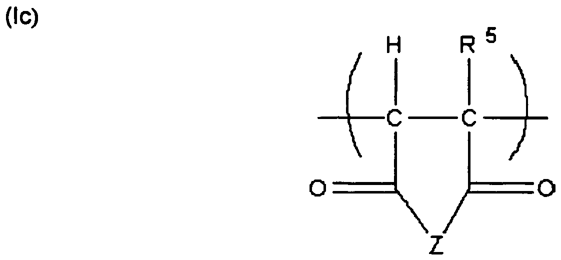 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 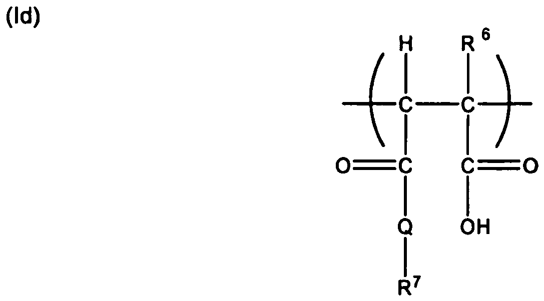 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

5. Verfahren nach einem der Ansprüche 1 bis 4, **dadurch gekennzeichnet, dass** als Säuremonomer Methacrylsäure, Acrylsäure, Maleinsäure, Maleinsäureanhydrid, ein Halbester der Maleinsäure oder eine Mischung aus mehreren dieser Komponenten eingesetzt wird.

6. Verfahren nach einem der Ansprüche 1 bis 5, **dadurch gekennzeichnet, dass** durch die Umsetzung des Polyethermakromonomers eine Struktureinheit im Copolymer erzeugt wird, die gemäß einer der allgemeinen Formeln (IIa), (IIb) und/oder (IIc) ist 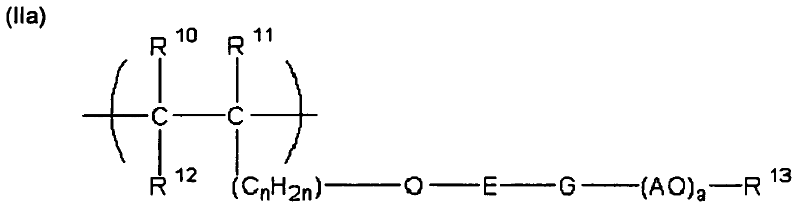 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 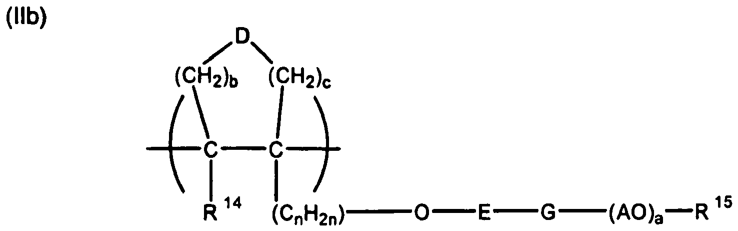 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 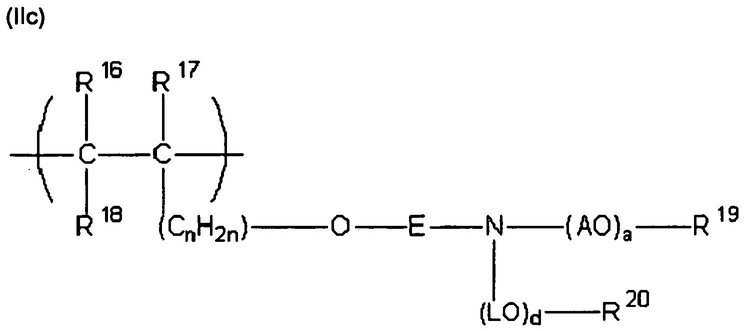 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

7. Verfahren nach einem der Ansprüche 1 bis 6, **dadurch gekennzeichnet, dass** als Polyethermakromonomer alkoxylierter Hydroxybutylvinylether und/oder alkoxylierter Diethylenglykolmonovinylether und/oder alkoxyliertes Isoprenol und/oder alkoxylierter (Meth)allylalkohol und/oder vinyliertes Methylpolyalkylenglykol mit bevorzugt jeweils einer arithmetisch mittleren Zahl an Oxyalkylengruppen von 4 bis 300 eingesetzt wird.

8. Verfahren nach einem der Ansprüche 1 bis 7, **dadurch gekennzeichnet, dass** als radikalische Polymerisationsinitiator ein H₂O₂ oder Alkaliperoxodisulfat enthaltendes Redoxinitiatorsystem eingesetzt wird, welches zusammen mit einem Reduktionsmittel verwendet wird, wobei das Reduktionsmittel bevorzugt vorliegt in Form von Natriumsulfit, Dinatriumsalz der 2-Hydroxy-2-sulfinatoessigsäure, Dinatriumsalz der 2-Hydroxy-2-sulfonatoessigsäure, Natriumhydroxymethansulfinat, Ascorbinsäure und/oder Iso-Ascorbinsäure, wobei die Temperatur des wässrigen Mediums während der Polymerisation auf 5 bis 43 °C eingestellt wird und zu Beginn der Polymerisation die Temperatur des wässrigen Mediums maximal 28 °C beträgt.

9. Verfahren nach einem der Ansprüche 1 bis 8, **dadurch gekennzeichnet, dass** das wässrige Medium in Form einer wässrigen Lösung vorliegt.

10. Verfahren nach einem der Ansprüche 1 bis 9, **dadurch gekennzeichnet, dass** insgesamt mindestens 45 Mol-%, bevorzugt mindestens 80 Mol-% aller Struktureinheiten des Copolymers durch Einpolymerisieren von Säuremonomer und Polyethermakromonomer erzeugt werden.

11. Verfahren nach einem der Ansprüche 1 bis 10, **dadurch gekennzeichnet, dass** ein Kettenregler eingesetzt wird, welcher bevorzugt Thiolgruppen enthält.

## Claims

1. Process for the preparation of a copolymer in semicontinuous operation in a polymerization apparatus, comprising a polymerization reactor connected to a metering device, in each case acid monomer being initially taken in the metering device and polyether macromonomer and water in the polymerization reactor, acid monomer being metered from the metering device into the polymerization reactor, free radical polymerization initiator being passed into the polymerization reactor before and/or during the metering of the acid monomer into the polymerization reactor so that an aqueous medium in which acid monomer and polyether macromonomer are reacted with formation of the copolymer by free radical polymerization forms in the polymerization reactor, an H₂O₂- or alkali metal peroxodisulphate-containing redox initiator system being used as the free radical polymerization initiator, the temperature of the aqueous medium during the polymerization being adjusted to 5 to 43°C, the temperature of the aqueous medium being not more than 28°C at the beginning of the polymerization, altogether 1 to 20 mol of acid monomer being metered into the polymerization reactor per mole of polyether macromonomer used, the weight ratio of polyether macromonomer used to water used being 5 : 1 to 1 : 5, at least 70% by weight of the water initially taken in the polymerization reactor being provided in a manner such that it is either added to the polymerization reactor at a temperature of not more than 19°C or that it is combined with the polyether macromonomer before it is added to the polymerization reactor and thus has a temperature of not more than 19°C.

2. Process according to Claim 1, **characterized in that** the at least 70% by weight of the water which is initially taken in the polymerization reactor and is provided is taken from naturally occurring ground or surface water, preferably ground water.

3. Process according to Claim 1 or 2, **characterized in that** the temperature of the aqueous medium during the polymerization is adjusted to 10 to 38°C and the temperature of the aqueous medium is not more than 24°C at the beginning of the polymerization, and at least 80% by weight of the water initially taken in the polymerization reactor is provided in cooled form in a manner such that it is either added to the polymerization reactor at a temperature of 2 to 17°C or that it is combined with the polyether macromonomer before it is added to the polymerization reactor and thus has a temperature of 2 to 17°C.

4. Process according to any of Claims 1 to 3, **characterized in that** a structural unit is produced in the copolymer by the reaction of the acid monomer, which structural unit is according to one of the general formulae (Ia), (Ib), (Ic) and/or (Id) 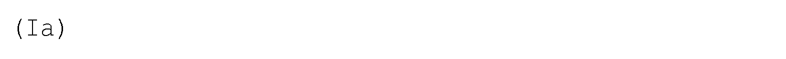 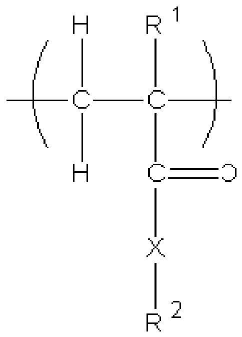 where
R¹ is identical or different and is represented by H and/or a straight-chain or branched C₁ - C₄ alkyl group;
X is identical or different and is represented by NH-(CₙH₂ₙ) where n = 1, 2, 3 or 4 and/or O-(CₙH₂ₙ) where n = 1, 2, 3 or 4 and/or by a unit not present;
R² is identical or different and is represented by OH, SO₃H, PO₃H₂, O-PO₃H₂ and/or para-substituted C₆H₄-SO₃H, with the proviso that, if X is a unit not present, R² is represented by OH; 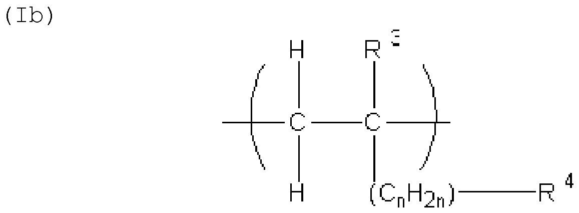 where
R³ is identical or different and is represented by H and/or a straight-chain or branched C₁ - C₄ alkyl group;
n = 0, 1, 2, 3 or 4;
R⁴ is identical or different and is represented by SO₃H, PO₃H₂, O-PO₃H₂ and/or C₆H₄-SO₃H present in para-substituted form; 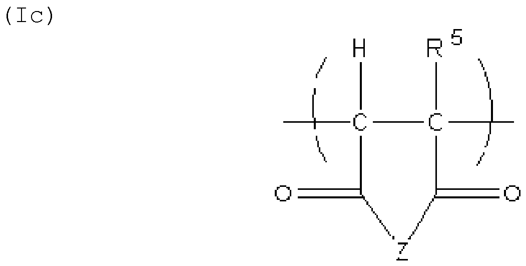 where
R⁵ is identical or different and is represented by H and/or a straight-chain or branched C₁ - C₄ alkyl group;
Z is identical or different and is represented by O and/or NH; 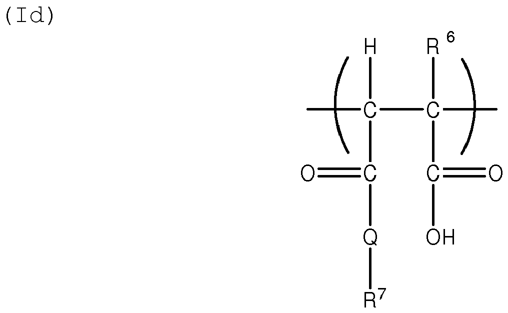 where
R⁶ is identical or different and is represented by H and/or a straight-chain or branched C₁ - C₄ alkyl group;
Q is identical or different and is represented by NH and/or O;
R⁷ is identical or different and is represented by H, (CₙH₂ₙ)-SO₃H where n = 0, 1, 2, 3 or 4, (CₙH₂ₙ) -OH where n = 0, 1, 2, 3 or 4; (CₙH₂ₙ)-PO₃H₂ where n = 0, 1, 2, 3 or 4, (CₙH₂ₙ)-OPO₃H₂ where n= 0, 1, 2, 3 or 4, (C₆H₄) -SO₃H, (C₆H₄) -PO₃H₂, (C₆H₄) -OPO₃H₂ and/or (CₘH₂ₘ) ₑ-O- (A'O)_{α}-R⁹ where m = 0, 1, 2, 3 or 4, e = 0, 1, 2, 3 or 4, A' = C_{x'}H_{2x'} where x' = 2, 3, 4 or 5 and/or CH₂C(C₆H₅)H-, α = an integer from 1 to 350 with R⁹ identical or different and represented by a straight-chain or branched C₁ - C₄ alkyl group.

5. Process according to any of Claims 1 to 4, **characterized in that** the acid monomer used is methacrylic acid, acrylic acid, maleic acid, maleic anhydride, a monoester of maleic acid or a mixture of a plurality of these components.

6. Process according to any of Claims 1 to 5, **characterized in that** a structural unit is produced in the copolymer by the reaction of the polyether macromonomer, which structural unit is according to one of the general formulae (IIa), (IIb) and/or (IIc) 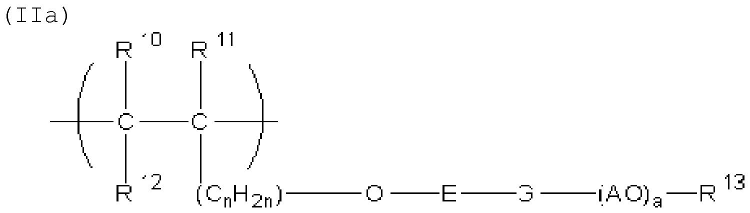 where
R¹⁰, R¹¹ and R¹² are in each case identical or different and, independently of one another, are represented by H and/or a straight-chain or branched C₁ - C₄ alkyl group;
E is identical or different and is represented by a straight-chain or branched C₁ - C₆ alkylene group, a cyclohexyl group, CH₂-C₆H₁₀, C₆H₄ present in ortho-, meta- or para-substituted form and/or a unit not present;
G is identical or different and is represented by O, NH and/or CO-NH, with the proviso that, if E is a unit not present, G is also present as a unit not present;
A is identical or different and is represented by CₓH₂ₓ where x = 2, 3, 4 and/or 5 (preferably x = 2) and/or CH₂CH(C₆H₅);
n is identical or different and is represented by 0, 1, 2, 3, 4 and/or 5;
a is identical or different and is represented by an integer from 2 to 350 (preferably 10 - 200);
R¹³ is identical or different and is represented by H, a straight-chain or branched C₁ - C₄ alkyl group, CO-NH₂, and/or COCH₃; 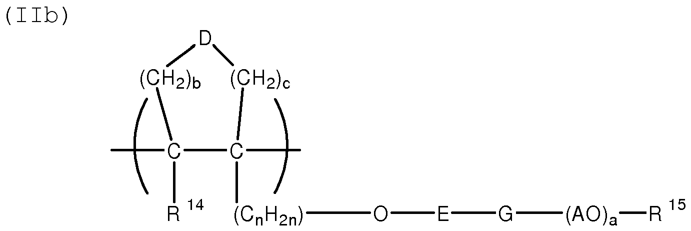 where
R¹⁴ is identical or different and is represented by H and/or a straight-chain or branched C₁ - C₄ alkyl group;
E is identical or different and is represented by a straight-chain or branched C₁ - C₆ alkylene group, a cyclohexyl group, CH₂-C₆H₁₀, C₆H₄ present in ortho-, meta- or para-substituted form and/or by a unit not present;
G is identical or different and is represented by a unit not present, O, NH and/or CO-NH, with the proviso that, if E is a unit not present, G is also present as a unit not present;
A is identical or different and is represented by CₓH₂ₓ where x = 2, 3, 4 and/or 5 and/or CH₂CH(C₆H₅) ;
n is identical or different and is represented by 0, 1, 2, 3, 4 and/or 5;
a is identical or different and is represented by an integer from 2 to 350;
D is identical or different and is represented by a unit not present, NH and/or O, with the proviso that if D is a unit not present: b = 0, 1, 2, 3 or 4 and c = 0, 1, 2, 3 or 4, where b + c = 3 or 4, and with the proviso that if D is NH and/or O: b = 0, 1, 2 or 3, c = 0, 1, 2 or 3, where b + c = 2 or 3;
R¹⁵ is identical or different and is represented by H, a straight-chain or branched C₁ - C₄ alkyl group, CO-NH₂, and/or COCH₃; 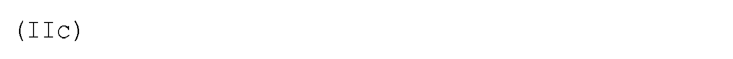 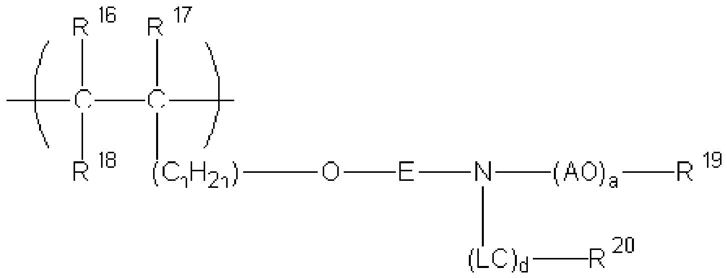 where
R¹⁶, R¹⁷ and R¹⁸ in each case are identical or different and, independently of one another, are represented by H and/or a straight-chain or branched C₁ - C₄ alkyl group;
E is identical or different and is represented by a straight-chain or branched C₁ - C₆ alkylene group, a cyclohexyl group, CH₂-C₆H₁₀ and/or C₆H₄ present in ortho-, meta- or para-substituted form;
A is identical or different and is represented by CₓH₂ₓ where x = 2, 3, 4 and/or 5 and/or CH₂CH(C₆H₅) ;
n is identical or different and is represented by 0, 1, 2, 3, 4 and/or 5;
L is identical or different and is represented by CₓH₂ₓ where x = 2, 3, 4 and/or 5 and/or CH₂-CH(C₆H₅) ;
a is identical or different and is represented by an integer from 2 to 350;
d is identical or different and is represented by an integer from 1 to 350;
R¹⁹ is identical or different and is represented by H and/or a straight-chain or branched C₁ - C₄ alkyl group,
R²⁰ is identical or different and is represented by H and/or a straight-chain C₁ - C₄ alkyl group.

7. Process according to any of Claims 1 to 6, **characterized in that** the polyether macromonomer used is alkoxylated hydroxybutyl vinyl ether and/or alkoxylated diethylene glycol monovinyl ether and/or alkoxylated isoprenol and/or alkoxylated (meth)allyl alcohol and/or vinylated methylpolyalkylene glycol having preferably in each case an arithmetic mean number of 4 to 300 oxyalkylene groups.

8. Process according to any of Claims 1 to 7, **characterized in that** the free radical polymerization initiator used is an H₂O₂- or alkali metal peroxodisulphate-containing redox initiator system which is used together with a reducing agent, the reducing agent preferably being present in the form of sodium sulphite, disodium salt of 2-hydroxy-2-sulphinatoacetic acid, disodium salt of 2-hydroxy-2-sulphonatoacetic acid, sodium hydroxymethanesulphinate, ascorbic acid and/or isoascorbic acid, the temperature of the aqueous medium during the polymerization being adjusted to 5 to 43°C and the temperature of the aqueous medium being not more than 28°C at the beginning of the polymerization.

9. Process according to any of Claims 1 to 8, **characterized in that** the aqueous medium is present in the form of an aqueous solution.

10. Process according to any of Claims 1 to 9, **characterized in that** altogether at least 45 mol%, preferably at least 80 mol%, of all structural units of the copolymer are produced by incorporation of acid monomer and polyether macromonomer in the form of polymerized units.

11. Process according to any of Claims 1 to 10, **characterized in that** a chain-transfer agent which preferably contains thiol groups is used.

## Revendications

1. Procédé pour la préparation d'un copolymère par un mode opératoire semi-continu dans un dispositif de polymérisation contenant un réacteur de polymérisation lié à un dispositif de dosage, le monomère acide étant disposé au préalable dans le dispositif de dosage et le macromonomère de polyéther et l'eau étant chacun disposés au préalable dans le réacteur de polymérisation, le monomère acide étant dosé du dispositif de dosage dans le réacteur de polymérisation, un initiateur de polymérisation radicalaire étant introduit dans le réacteur de polymérisation avant et/ou pendant le dosage du monomère acide dans le réacteur de polymérisation, de telle sorte qu'il se forme dans le réacteur de polymérisation un milieu aqueux, dans lequel le monomère acide et le macromonomère de polyéther sont transformés en formant le copolymère par polymérisation radicalaire, en utilisant comme initiateur de polymérisation radicalaire un système d'initiation redox contenant H₂O₂ ou du peroxodisulfate de métal alcalin, la température du milieu aqueux étant réglée pendant la polymérisation à 5 jusqu'à 43°C, la température du milieu aqueux au début de la polymérisation valant au maximum 28°C, 1 à 20 moles de monomère acide par mole utilisée de macromonomère de polyéther utilisée étant dosés au total dans le réacteur de polymérisation, le rapport pondéral de macromonomère de polyéther utilisé à l'eau utilisée valant 5:1 à 1:5, au moins 70% en poids de l'eau disposée au préalable dans le réacteur de polymérisation étant mis à disposition, soit de manière telle qu'ils sont introduits dans le réacteur de polymérisation à une température d'au maximum 19°C, soit de manière telle qu'ils sont rassemblés avant leur introduction dans le réacteur de polymérisation avec le macromonomère de polyéther en présentant une température d'au maximum 19°C.

2. Procédé selon la revendication 1, **caractérisé en ce qu'**au moins 70% en poids de l'eau disposée au préalable dans le réacteur de polymérisation, qui sont mis à disposition, sont prélevés de l'eau souterraine ou de surface, de préférence de l'eau souterraine provenant de la nature.

3. Procédé selon la revendication 1 ou 2, **caractérisé en ce que** la température du milieu aqueux pendant la polymérisation est réglée à 10 jusqu'à 38°C et, au début de la polymérisation, la température du milieu aqueux vaut au maximum 24°C, ainsi qu'au moins 80% en poids de l'eau disposée au préalable dans le réacteur de polymérisation sont mis à disposition de manière refroidie de manière telle que soit ils sont ajoutés à une température de 2 à 17 ° C dans le réacteur de polymérisation, soit ils sont rassemblés avec le macromonomère de polyéther avant d'être introduits dans le réacteur de polymérisation en présentant une température de 2 à 17°C.

4. Procédé selon l'une quelconque des revendications 1 à 3, **caractérisé en ce qu'**une unité de structure est générée dans le copolymère par transformation du monomère acide, qui est selon l'une des formules générales (Ia), (Ib), (Ic) et/ou (Id) 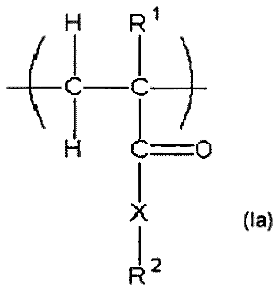 où
R¹ est identique ou différent et représente H et/ou un groupe C₁-C₄-alkyle non ramifié ou ramifié ;
X est identique ou différent et représente NH-(CₙH₂ₙ) avec n = 1, 2, 3 ou 4 et/ou O-(CₙH₂ₙ) avec n = 1, 2, 3 ou 4 et/ou une unité non présente ;
R² est identique ou différent et représente OH, SO₃H, PO₃H₂, O-PO₃H₂ et/ou (C₆H₄ substitué en position para)-SO₃H, à condition que si X est une unité non présente, R² représente OH ; 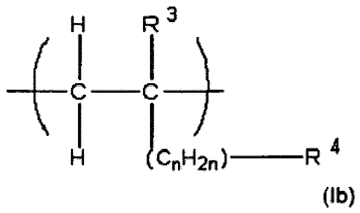
où
R³ est identique ou différent et représente H et/ou un groupe C₁-C₄-alkyle non ramifié ou ramifié ;
n = 0, 1, 2, 3 ou 4
R⁴ est identique ou différent et représente SO₃H, PO₃H₂, O-PO₃H₂ et/ou (C₆H₄ substitué en position para)-SO₃H ; 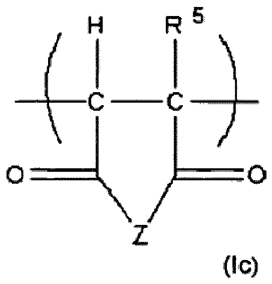
où
R⁵ est identique ou différent et représente H et/ou un groupe C₁-C₄-alkyle non ramifié ou ramifié ;
Z est identique ou différent et représente O et/ou NH ; 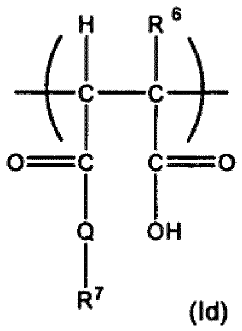
où
R⁶ est identique ou différent et représente H et/ou un groupe C₁-C₄-alkyle non ramifié ou ramifié ;
Q est identique ou différent et représente NH et/ou O ;
R⁷ est identique ou différent et représente H, (CₙH₂ₙ)-SO₃H avec n = 0, 1, 2, 3 ou 4, (CₙH₂ₙ)-OH avec n = 0, 1, 2, 3 ou 4 ; (CₙH₂ₙ)-PO₃H₂ avec n = 0, 1, 2, 3 ou 4, (CₙH₂ₙ)-OPO₃H₂ avec n = 0, 1, 2, 3 ou 4, (C₆H₄)-SO₃H, (C₆H₄)-PO₃H₂, (C₆H₄)-OPO₃H₂ et/ou (CₘH₂ₘ)ₑ-O-(A'O)_{α}-R⁹ avec m = 0, 1, 2, 3 ou 4, e = 0, 1, 2, 3 ou 4, A' = C_{x'}H_{2x'} avec x' = 2, 3, 4 ou 5 et/ou CH₂C(C₆H₅)H-, α = un nombre entier de 1 à 350 avec R⁹ étant identique ou différent et représentant un groupe C₁-C₄-alkyle non ramifié ou ramifié.

5. Procédé selon l'une quelconque des revendications 1 à 4, **caractérisé en ce qu'**on utilise, comme monomère acide, de l'acide méthacrylique, de l'acide acrylique, de l'acide maléique, de l'anhydride de l'acide maléique, un semi-ester de l'acide maléique ou un mélange de plusieurs de ces composants.

6. Procédé selon l'une quelconque des revendications 1 à 5, **caractérisé en ce qu'**une unité de structure est générée dans le copolymère par transformation du macromonomère de polyéther, qui est selon l'une des formules générales (IIa), (IIb) et/ou (IIc) 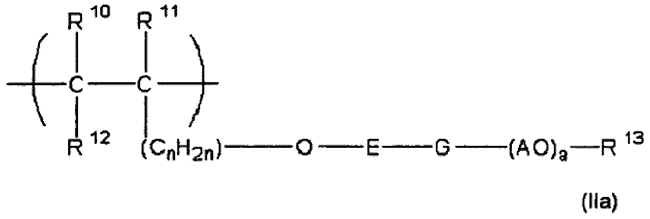 où
R¹⁰, R¹¹ ainsi que R¹² sont à chaque fois identiques ou différents les uns des autres et représentent H et/ou un groupe C₁-C₄-alkyle non ramifié ou ramifié ;
E est identique ou différent et représente un groupe C₁-C₆-alkylène non ramifié ou ramifié, un groupe cyclohexyle, CH₂-C₆H₁₀, C₆H₄ substitué en position ortho, méta ou para et/ou une unité non présente ;
G est identique ou différent et représente O, NH et/ou CO-NH, à condition que si E est une unité non présente, G se trouve également sous forme d'unité non présente ;
A est identique ou différent et représente CₓH₂ₓ avec x = 2, 3, 4 et/ou 5 (de préférence x = 2) et/ou CH₂CH(C₆H₅) ;
n est identique ou différent et représente 0, 1, 2, 3, 4 et/ou 5 ;
a est identique ou différent et représente un nombre entier de 2 à 350 (de préférence 10-200) ;
R¹³ est identique ou différent et représente H, un groupe C₁-C₄-alkyle non ramifié ou ramifié, CO-NH₂ et/ou COCH₃ ; 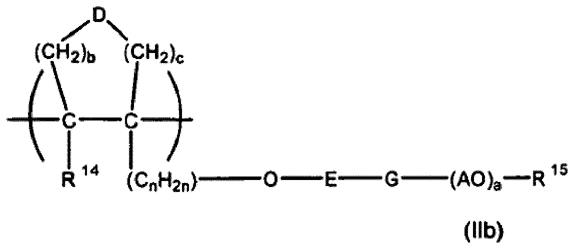
où
R¹⁴ est identique ou différent et représente H et/ou un groupe C₁-C₄-alkyle non ramifié ou ramifié ;
E est identique ou différent et représente un groupe C₁-C₆-alkylène non ramifié ou ramifié, un groupe cyclohexyle, CH₂-C₆H₁₀, C₆H₄ substitué en position ortho, méta ou para et/ou une unité non présente ;
G est identique ou différent et représente une unité non présente, O, NH et/ou CO-NH, à condition que si E est une unité non présente, G se trouve également sous forme d'unité non présente ;
A est identique ou différent et représente CₓH₂ₓ avec x = 2, 3, 4 et/ou 5 et/ou CH₂CH(C₆H₅) ;
n est identique ou différent et représente 0, 1, 2, 3, 4 et/ou 5 ;
a est identique ou différent et représente un nombre entier de 2 à 350 ;
D est identique ou différent et représente une unité non présente, NH et/ou O, à condition que si D est une unité non présente : b = 0, 1, 2, 3 ou 4 et c = 0, 1, 2, 3 ou 4, avec b + c = 3 ou 4, et à condition que lorsque D représente NH et/ou O : b = 0, 1, 2 ou 3, c = 0, 1, 2 ou 3, avec b + c = 2 ou 3 ;
R¹⁵ est identique ou différent et représente H, un groupe C₁-C₄-alkyle non ramifié ou ramifié, CO-NH₂ et/ou COCH₃ ; 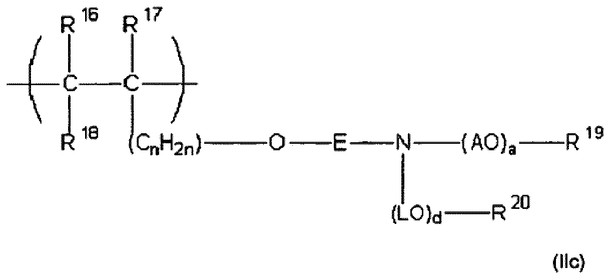
où
R¹⁶, R¹⁷ ainsi que R¹⁶ sont à chaque fois identiques ou différents les uns des autres et représentent H et/ou un groupe C₁-C₄-alkyle non ramifié ou ramifié ;
E est identique ou différent et représente un groupe C₁-C₆-alkylène non ramifié ou ramifié, un groupe cyclohexyle, CH₂-C₆H₁₀, C₆H₄ substitué en position ortho, méta ou para ;
A est identique ou différent et représente CₓH₂ₓ avec x = 2, 3, 4 et/ou 5 et/ou CH₂CH(C₆H₅) ;
n est identique ou différent et représente 0, 1, 2, 3, 4 et/ou 5 ;
L est identique ou différent et représente CₓH₂ₓ avec x = 2, 3, 4 et/ou 5 et/ou CH₂CH(C₆H₅) ;
a est identique ou différent et représente un nombre entier de 2 à 350 ;
d est identique ou différent et représente un nombre entier de 1 à 350 ;
R¹⁹ est identique ou différent et représente H et/ou un groupe C₁-C₄-alkyle non ramifié ou ramifié,
R²⁰ est identique ou différent et représente H et/ou un groupe C₁-C₄-alkyle non ramifié ou ramifié.

7. Procédé selon l'une quelconque des revendications 1 à 6, **caractérisé en ce qu'**on utilise, comme macromonomère de polyéther, l'hydroxybutylvinyléther alcoxylé et/ou le diéthylèneglycolmonovinyléther alcoxylé et/ou l'isoprénol alcoxylé et/ou l'alcool (méth)allylique alcoxylé et/ou le méthylpolyalkylèneglycol vinylé présentant de préférence à chaque fois un nombre arithmétique moyen de groupes oxyalkylène de 4 à 300.

8. Procédé selon l'une quelconque des revendications 1 à 7, **caractérisé en ce qu'**on utilise comme initiateur de polymérisation radicalaire un système d'initiation redox contenant H₂O₂ ou du peroxodisulfate de métal alcalin, qui est utilisé ensemble avec un réducteur, le réducteur se trouvant de préférence sous forme de sulfite de sodium, de sel disodique de l'acide 2-hydroxy-2-sulfinatoacétique, de sel disodique de l'acide 2-hydroxy-2-sulfonatoacétique, d'hydroxyméthanesulfinate sodique, d'acide ascorbique et/ou d'acide iso-ascorbique, la température du milieu aqueux étant réglée pendant la polymérisation à 5 jusqu'à 43°C et la température du milieu aqueux valant au maximum 28°C au début de la polymérisation.

9. Procédé selon l'une quelconque des revendications 1 à 8, **caractérisé en ce que** le milieu aqueux se trouve sous forme d'une solution aqueuse.

10. Procédé selon l'une quelconque des revendications 1 à 9, **caractérisé en ce qu'**au total au moins 45% en mole, de préférence au moins 80% en mole de toutes les unités de structure du copolymère sont générés par copolymérisation de monomères acides et de macromonomères de polyéther.

11. Procédé selon l'une quelconque des revendications 1 à 10, **caractérisé en ce qu'**on utilise un agent régulateur de chaîne qui contient de préférence des groupes thiol.
